# EUROPEAN PATENT APPLICATION

(11) **EP 2 657 455 A1**
(43) Date of publication of application: **30.10.2013**
(21) Application number: 12165979.1
(22) Date of filing: 27.04.2012
(51) Int. Cl.: F01D 11/00, F02C 7/24, F02C 7/28, F16J 15/08

(54) **Heat shield and a method for construction thereof**

(71) Applicant: Siemens Aktiengesellschaft, 80333 München (DE)
(72) Inventor: Szijarto, Janos, 61295 Finspong (SE)

(57) **Abstract**

The invention relates to a heat shield (150) and a method for construction of the heat shield (150). The heat shield (150) has a first heat shield segment (160) with a first axial portion (220) and a second heat shield segment (170) with a second axial portion (230). The first heat shield segment (160) is a first segment and the second heat shield segment (170) is a second segment of the heat shield (150) respectively. A sealing means (180) comprising a thermally expandable portion (190) couples the first heat shield segment (160) and the second heat shield segment (170). The coupling is accomplished by adapting the sealing means (180) to receive the first axial portion (220) and the second axial portion (230). The thermally expandable portion (190) expands based on an ambient temperature of the heat shield (150).

## Description

The present invention relates to a heat shield and a method for construction of the heat shield.

A heat shield insulates and protects a system, for example a gas turbine, from intense heat and high temperatures to which the system is exposed to. The heat shield shields the system by absorbing excessive heat from an outside surface by either absorbing, reflecting or dissipating the heat. The heat shield is typically made of a metal, an alloy, a composite material, or a combination of the aforesaid, which withstands the aforementioned high temperatures and thermal stresses arising thereof. For example, the heat shield of a space shuttle is made of a multitude of ceramic heat tiles to protect the space shuttle during its re-entry into the earth's atmosphere. Similarly, the heat shield of a launch vehicle is made of a rigid structure composed of an aluminium based alloy that protects a payload of the launch vehicle from being exposed to excessive heat and thermal stress, which is experienced by the launch vehicle during its onward journey.

In the field of combustion turbines, such as a gas turbine, the heat shield is present in the turbine section of the gas turbine. The heat shield isolates the turbine section, and protects other sections of the gas turbine from the hot gases, intense heat and high temperatures produced and generated during the combustion of fuel in a combustor section of the gas turbine. The heat shield forms a part of a stator of the turbine section and shields the turbine by protecting the turbine from thermal breakdown and operational shutdown of the gas turbine. The heat shield undergoes thermal expansion upon being exposed to these high temperatures, and the thermal cracks caused thereof give rise to uncontrolled thermal leakages.

A conventional heat shield is made of ceramic tiles, which is a rigid structure, and fails to protect the turbine section by not being able to adjust itself to the thermal expansion. This leads to a consequent breakdown of the gas turbine if implemented therein.

WO 2007101757 A1 titled 'Gas turbine with annular heat shield and angled sealing strips' relates to a gas turbine having a stator, which concentrically encloses a hot gas passage and is screened off from the hot gas passage by an annular heat shield, which is composed of a multiplicity of segments, which are arranged one behind the other in the circumferential direction. The segments are contiguous in the circumferential direction in each case while forming a gap, wherein, in order to seal the gaps between the contiguous segments, seals are arranged which comprise thin, elongated sealing strips which are accommodated in sealing grooves, corresponding to one another and defined by a wall transversely to the longitudinal direction, in the opposite end faces of the contiguous segments of the heat shield. This heat shield is not stable, and is incapable of preventing the uncontrolled thermal leakages due to the inefficient design of the sealing.

It is an object of the present invention to propose a stable, flexible and an efficient design solution for a heat shield, which obviates the uncontrolled thermal leakages, and which is also capable of being manufactured easily.

The above objects are achieved by a heat shield for a gas turbine according to claim 1 and a method for construction of the heat shield according to claim 15.

The underlying idea of the present invention is to improve the construction of a heat shield by rendering operational stability and the ability to control thermal leakages arising during its operation. Additionally, the idea of the present invention is also to propose an efficient and a stable design solution for the heat shield. The heat shield is designed to be stable under all its normal operating conditions, wherein the heat shield is exposed to intense temperatures that cause thermal expansions of the heat shield.

The invention is a heat shield that comprises a first heat shield segment and a second heat shield segment coupled together by a sealing means made of a thermally expandable portion. The first heat shield segment is a first segment of the heat shield and the second heat shield segment is a second segment of the heat shield. The first heat shield segment has a first axial portion and the second heat shield segment has a second axial portion. The sealing means is adapted in a way that it receives the first axial portion and the second axial portion for coupling the first heat shield segment and the second heat shield segment. The thermally expandable portion expands based on an ambient temperature of the heat shield.

According to an embodiment of the invention, the sealing means has a seal strip, which has a first section and a second section. The first section is adapted in a manner that it receives the first axial portion, thereby coupling the first heat shield segment and the seal strip. Similarly, the second section is adapted in a manner that it receives the second axial portion, thereby coupling the second heat shield segment and the seal strip. This couples effectively the first heat shield segment and the second heat shield segment. This is advantageous as it simplifies the design by rendering modularity to the heat shield. The heat shield can be assembled by coupling individual heat shield segments, which increases the portability of the heat shield. Additionally, the expandability of the seal strip is advantageous as it factors in to a thermal expansion of the heat shield, thereby obviating a thermal crack that may arise thereof.

According to another embodiment of the invention, the first axial portion is a first axial groove and the second axial portion is a second axial groove. The first section is a first complementary axial groove and the second section is a second complementary axial groove. The first axial groove and the first complementary axial groove receive one another. Similarly, and the second axial groove and the second complementary axial groove receive one another. This reduces the time required to construct the heat shield from its constituting elements. Furthermore, a groove is a simple mechanical design to increase the holding grip between two structural entities.

According to yet another embodiment of the invention, the thermally expandable portion is made of a corrugated portion, which has a first flank and a second flank. The first complementary axial groove is located on the first flank and the second complementary groove is located on the second flank. The first flank and the second flank are located on opposite sides of the corrugated portion. The mechanical advantage of the corrugated portion lies in its ability to expand in a facile manner with an increase in the ambient temperature, and contract to return to its original shape with a reduction in the ambient temperature.

According to yet another embodiment of the invention, the corrugated portion is an M-seal, which has the first flank and the second flank. An M-seal increases the sturdiness of the seal strip, by rendering a good fit between the first heat shield segment and the second heat shield segment. Additionally, the heat shield with an M-seal possesses certain properties akin to a shock absorber and it withstands mechanical and thermal shocks encountered during its operation.

According to yet another embodiment of the invention, the sealing means has a fastener. The fastener fastens the first heat shield segment and the second heat shield segment. This renders additional strength to the coupling between the first heat shield segment and the second heat shield segment.

The heat shield is subject to mechanical stresses and movements during its operation, which may result in shearing of the heat shield segments. In a preferred variation of the aforesaid embodiment, the fastener is adapted to fasten the first heat shield segment and the second heat shield segments in a manner that prevents the shearing of the segments.

In another preferred variation of the aforesaid embodiment, the fastener has a first portion and a second portion. The first portion is insertable through the first heat shield segment, and the second portion is insertable through the second heat shield segment. This fastens the first heat shield segment to the second heat shield segment, thereby rendering a tight fit to the coupling and prevents shearing of the individual heat shield segments of the heat shield.

According to yet another embodiment of the invention, the thermally expandable portion expands proportionally with an increase in the ambient temperature. This ensures stability and predictability to the mechanical behavioural characteristics of the sealing means. Abnormal mechanical behaviour leads to an erratic thermal behaviour and causes disruptions in the functionality of the heat shield, which is obviated by this embodiment of the invention.

According to yet another embodiment of the invention, the sealing means has one or more holes bored into at one or more dedicated locations of the sealing means. The one or more holes facilitate in introducing a controlled leakage in the geometrical space enclosed by the heat shield. The controlled leakage, which occurs in the form of cold air released out of the geometrical space through the one or more holes, is beneficial in the regulation of the ambient temperature in the geometrical space, thereby increasing the life of the heat shield.

According to yet another embodiment of the invention, the thermally expandable portion possesses a greater co-efficient of thermal expansion compared to the first heat shield segment and the second heat shield segment. This ensures that the thermally expandable portion undergoes a higher degree of volumetric expansion compared to the first heat shield segment and the second heat shield segment with an increase in the ambient temperature. This protects the heat shield made of the heat shield segments from undergoing mechanical deformations and cracks.

According to yet another embodiment of the invention, the thermally expandable portion is made of an alloy of nickel. Nickel alloys display uniform and predictable expansion over a certain temperature range. Furthermore, nickel alloys possess high strength, a constant modulus of elasticity and co-efficient of thermal expansion. These are advantageous for the heat shield that is exposed to harsh industrial surroundings.

According to a preferred embodiment of the invention, an annular heat shield comprises the heat shield according to any of the aforementioned embodiments described herein. The annular heat shield inherits the aforementioned characteristics and the respective advantages pertinent to the respective embodiments. The annular heat shield has a wide range of applications, for example, in a gas turbine, turbo machine, et cetera.

According to another preferred embodiment of the invention, a gas turbine comprises the annular heat shield, which in turn comprises the heat shield according to any of the aforementioned embodiments described herein. The gas turbine is used widely in the field of power generation. The gas turbine inherits the aforementioned characteristics and the respective advantages pertinent to the respective embodiments.

The heat shield according to any of the aforementioned embodiments is constructed according to the following method.

The first heat shield segment and the second heat shield segment are arranged in a manner where the first axial portion and the second axial portion are parallel to each other. Thereafter, the first heat shield segment and the second heat shield segment are coupled to one another by the sealing means comprising the thermally expandable portion. This is performed by adapting the sealing means to receive the first axial portion and the second axial portion. Subsequently, the first heat shield segment is fastened to the second heat shield segment to form a tight fit. Finally, one or more holes are provided at one or more dedicated locations of the sealing means for introducing the controlled leakage. The controlled leakage in the geometrical space enclosed by the heat shield regulates the ambient temperature of the geometrical space.

The aforementioned and other embodiments of the invention related to a heat shield and a method of construction thereof will now be addressed with reference to the accompanying drawings of the present invention. The illustrated embodiments are intended to illustrate, but not to limit the invention. The accompanying drawings contain the following figures, in which like numbers refer to like parts, throughout the description and drawings.

The figures illustrate in a schematic manner further examples of the embodiments of the invention, in which:
- FIG 1: depicts a block diagram of a gas turbine and its components, which includes a turbine with a heat shield,
- FIG 2: depicts an elevated view of the turbine with the heat shield referred to in FIG 1, where the heat shield comprises a first heat shield segment and a second heat shield segment and a sealing means for coupling the first heat shield segment and the second heat shield segment,
- FIG 3: depicts a perspective view of an embodiment of the heat shield referred to in FIG 2, where the heat shield comprises a fastener to fasten the first heat shield segment and the second heat shield segment,
- FIG 4: depicts a close-up view of the sealing means that couples the first heat shield segment with the second heat shield segment of the heat shield referred to in FIG 2,
- FIG 5: depicts an exploded view of the heat shield with the first heat shield segment with the second heat shield segment and the sealing means with the fasteners forming the close-up view referred to in FIG 4,
- FIG 6: depicts a technical drawing of a cross-sectional view of the sealing means with the first heat shield segment with the second heat shield segment of the heat shield referred to in FIG 4, along the section VI-VI, at a location where a first axial seal fastens the first heat shield segment to the second heat shield segment of the heat shield,
- FIG 7: depicts a technical drawing of a cross-sectional view of the sealing means with the first heat shield segment with the second heat shield segment of the heat shield referred to in FIG 4, along the section VII-VII, at a location where a second axial seal fastens the first heat shield segment to the second heat shield segment of the heat shield,
- FIG 8: depicts a technical drawing of a cross-sectional view of the sealing means with the first heat shield segment and the second heat shield segment of the heat shield referred to in FIG 4, along the section VIII-VIII,
- FIG 9: depicts the sealing means referred to in FIG 2, where the sealing means is provided with one or more holes for introducing a controlled leakage,
- FIG 10: depicts a perspective view of another embodiment of the heat shield referred to in FIG 2, where the heat shield is composed of the first heat shield segment with the second heat shield segment and the sealing means to seal the first heat shield segment with the second heat shield segment,
- FIG 11: depicts a close-up view of the sealing means that seals the first heat shield segment with the second heat shield segment of the heat shield referred to in FIG 10,
- FIG 12: depicts an exploded view of the heat shield with the first heat shield segment with the second heat shield segment and the sealing means forming the close-up view referred to in FIG 11,
- FIG 13: depicts a technical drawing of a cross-sectional view of the sealing means with the first heat shield segment with the second heat shield segment of the heat shield referred to in FIG 11, along the section XIII-XIII,
- FIG 14: depicts a flowchart of a method for construction of the heat shield.

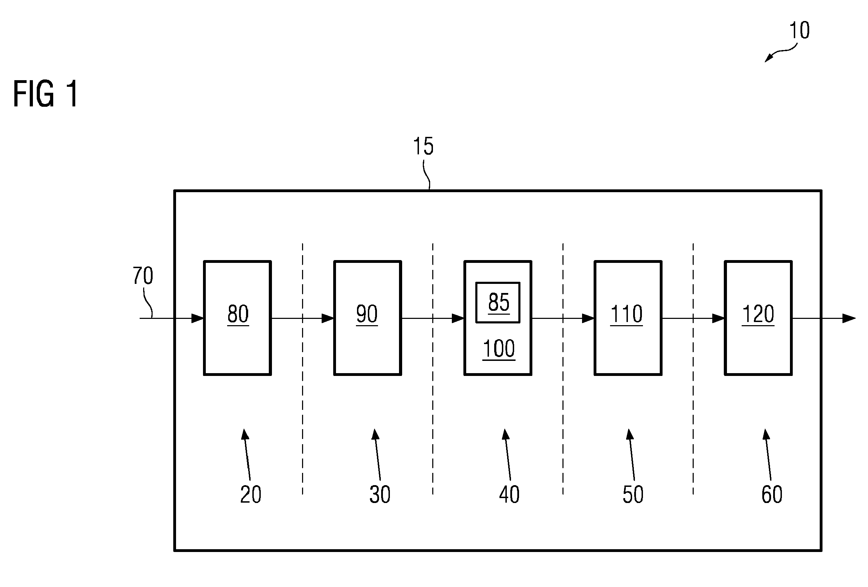

FIG 1 depicts a block diagram of a gas turbine 10 with a casing 15 for generating power. The gas turbine 10 comprises an intake section 20, a compression section 30, a combustion section 40, a turbine section 50, and an exhaust section 60. Air 70 enters into the gas turbine 10 through an air inlet 80 into the intake section 20. The air 70 is compressed by a compressor 90 in the compression section 30, thereby enhancing the density of the air 70. The air 70 exiting the compression section 30 is mixed with a fuel 85 and ignited in a combustor 100 in the combustion section 40. The combustion of the air 70 with the fuel 85 in the combustor 100 results in an expansion of the air 70, thereby increasing the kinetic energy of the air 70. The air 70 is then directed towards a turbine 110 in the turbine section 50, where the kinetic energy of the air 70 is transferred to the turbine 110 for generating power. The hot air 70 exits the gas turbine 10 through a nozzle 120 in the exhaust section 60 at every combustion cycle.

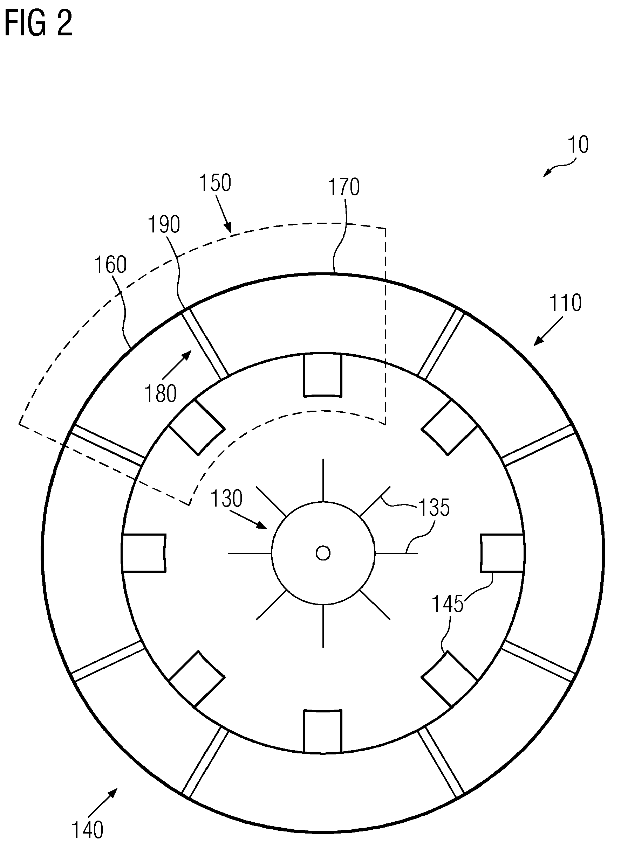

FIG 2 depicts the turbine 110 in the turbine section 50 of the gas turbine 10. The turbine 110 comprises a rotor 130 with a plurality of blades 135, and a stator 140 with a plurality of vanes 145. The hot air 70 from the combustor 100 is directed by the plurality of vanes 145 towards the plurality of blades 135, thereby causing the rotor 130 to rotate and generate the power. The combustion of the air 70 causes a tremendous increase in the temperature of the air 70. The gas turbine 10 and other components of the gas turbine 10 are subjected to the hot air 70 interacting inside the turbine section 50.

The stator 140 comprises a heat shield 150, which shields the other components of the gas turbine 10 by absorbing excessive heat present in the hot air 70 interacting on the plurality of blades 135. The heat shield 150 is an integral component, which is subject to thermal expansion under the influence of the hot air 70. The heat shield 150 can be either a monolithic unit, which is made of a single unit, or composed of multiple segments coupled to one another. According to the invention, the heat shield 150 is composed of multiple segments coupled to one another. The heat shield 150 is made of, but not limited to, a first heat shield segment 160 and a second heat shield segment 170. The first heat shield segment 160 is a first segment and the second heat shield segment 170 is a second segment of the aforementioned multiple segments constituting the heat shield 150. The first heat shield segment 160 and the second heat shield segment 170 are coupled to one another by a sealing means 180. The heat shield 150 is a part of the stator 140, and the heat shield 150 can be, but not limited to, integrated along with the plurality of vanes 145 or can be a separate unit surrounding the plurality of vanes 145.

In accordance with an embodiment, the heat shield 150 depicted in FIG 2 is an annular heat shield, and the annular heat shield 150 is made of, but not limited to, the first heat shield segment 160 and the second heat shield segment 170. The first heat shield segment 160 and the second heat shield segment 170 are coupled to one another by the sealing means 180.

The sealing means 180 serves to couple the first heat shield segment 160 and the second heat shield segment 170. The sealing means 180 comprises a thermally expandable portion 190, which expands based on an ambient temperature of the heat shield 150. Additionally, the property of the thermally expandable portion 190 is such that expands with an increase in the ambient temperature and contracts with a decrease in the ambient temperature. The expansion and contraction of the thermally expandable portion 190 are a function of the temperature, and are related in a proportional manner with the ambient temperature. The relationship can be, but not limited to, a first order, a second order, a logarithmic, exponential, polynomial, and the like, depending on the material composition of the thermally expandable portion 190. Also, the expansion and contraction of the thermally expandable portion 190, under the normal operating temperature conditions to which the heat shield 150 is exposed to, are such that the coupling between the first heat shield segment 160 and the second heat shield segment 170 remains intact without undergoing disruptions, for example, cracks, shears and the like caused due to thermal stresses and thermal gradients or temperature variations.

Furthermore, the thermally expandable portion 190 is such that its co-efficient of thermal expansion is higher than the co-efficient of thermal expansion of the first heat shield segment 160 and/or the second heat shield segment 170. This means that the thermally expandable portion undergoes a higher volumetric expansion in comparison with the first heat shield segment 160 and the second heat shield segment 170 with an increase in the ambient temperature. This ensures the expansion of the annular heat shield 150 comprising multiple heat shield segments 160, 170 without the heat shield segments 160, 170 undergoing deformations and/or cracks. The thermally expandable portion 190 is also made of a flexible material that is pliable to accommodate the mechanical stresses and deformations without undergoing buckling and cracking.

In accordance with an embodiment, the thermally expandable portion 190 is made of an alloy of nickel, because of the uniform and predictable expansion displayed by nickel alloys over a certain temperature range. Furthermore, nickel alloys possess high strength, a constant modulus of elasticity and higher co-efficient of expansion compared to the first heat shield segment 160 and/or the second heat shield segment 170. However, the thermally expandable portion can be made of any material that displays and behaves in the aforementioned manner and possesses the aforementioned characteristics.

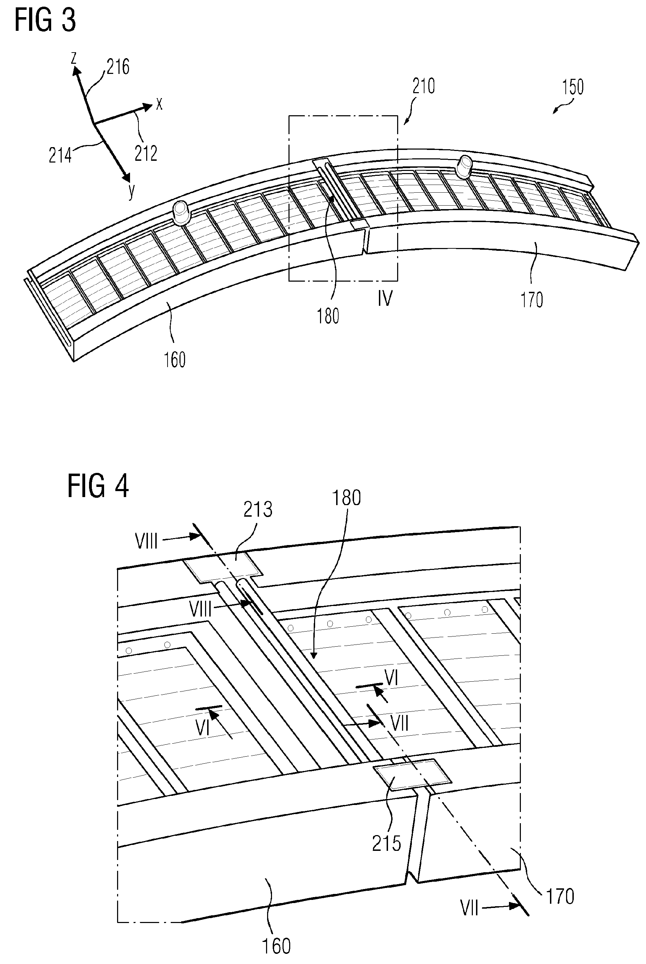

FIG 3 depicts a perspective view of the heat shield 150 according to an embodiment described herein. The heat shield 150 is made of the first heat shield segment 160 and the second heat shield segment 170 coupled to one another by the sealing means 180. The sealing means 180 further comprises a fastener 200, which fastens the first heat shield segment 160 to the second heat shield segment 170 and secures the first heat shield segment 160 and the second heat shield segment 170 in a tight manner. The fastener 200 increases the coupling between the heat shield segments 160, 170. A sealing region 210 depicts the sealing means 180 and its interaction with the first heat shield segment 160 and the second heat shield segment 170.

A close-up view of the sealing region 210 is depicted in FIG 4, where the sealing region 210 illustrates the sealing means 180 for coupling the first heat shield segment 160 with the second heat shield segment 170. The fastener 200 is, but not limited to, a pair of axial seals 213, 215 for fastening the first heat shield segment 160 to the second heat shield segment 170.

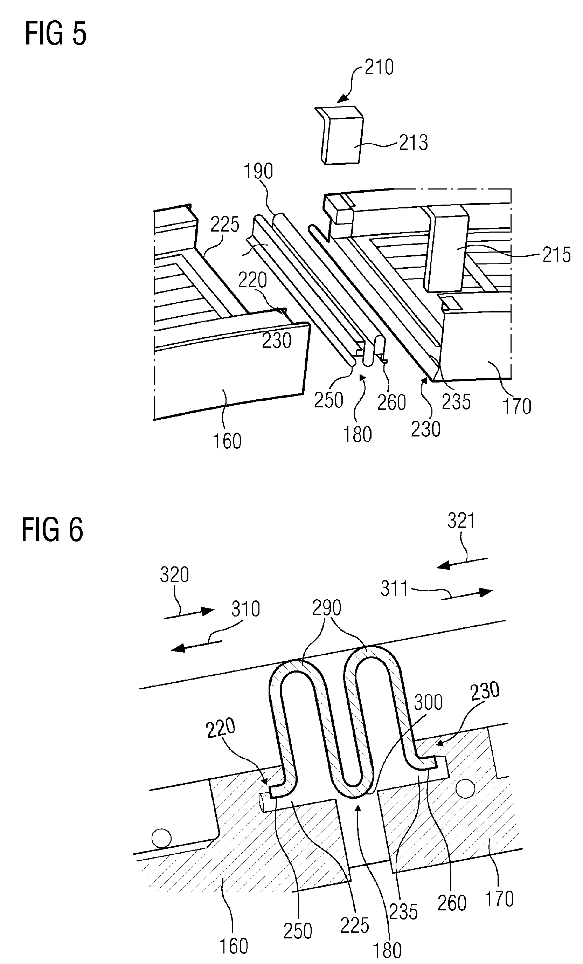

Cross sections VI-VI, VII-VII and VIII-VIII depict the manner in which the sealing means 180 achieves the coupling of the first heat shield segment 160 and the second heat shield segment 170. This will be elucidated in detail with reference to FIGS 5 to 8.

FIG 5 depicts an exploded view of the sealing region 210 and its constituents in accordance with multiple embodiments of the invention. The first heat shield segment 160 comprises a first axial portion 220 and the second heat shield segment 170 comprises a second axial portion 230. The sealing means 180 comprises a seal strip 240 with the thermally expandable portion 190, and the fastener 200 in the form of the pair of axial seals 213, 215 comprising a first axial seal 213 and a second axial seal 215. The first axial seal 213 and the second axial seal 215 are located on opposing sides of the heat shield 150. The seal strip 240 comprises a first section 250 and a second section 260. The first section 250 is adapted to receive the first axial portion 220 and the second section 260 is adapted to receive the second axial portion 230. The first section 250 and the second section 260 are adapted such that the first section 250 along with the first axial portion 220 and the second section 260 along with the second axial portion 230 received respectively form the coupling. This couples the first heat shield segment 160 with the seal strip 240 and the second heat shield segment 170 with the seal strip 240 respectively, thereby resulting in the coupling between the first heat shield segment 160 and the second heat shield segment 170.

The word 'adapting', according to the aforementioned context and in the subsequent sections of the description, is defined as shaping the profile of the first section 250, the second section 260, the first axial portion 220, and/or the second axial portion 230, such that an appropriate coupling is achieved to couple the first heat shield segment 160 with the second heat shield segment 170. A desired profile is obtainable by shaping, but not limited to, milling, moulding, casting, laser sintering, and the like. For example, the first axial portion 220 and the first section 250 are shaped to complement each other to obtain an appropriate fit, and the same is applicable to the second axial portion 230 and the second section 260.

According to an embodiment, the first section 250 and the second section 260 are adapted to receive the first axial portion 220 and the second axial portion 230 for coupling the first heat shield segment 160 with the second heat shield segment 240. However, the 'adapting' can also be performed, but not restricted to, on the first axial portion 220 and the second axial portion 230, to receive the first section 250 and the second section 260 respectively.

The first axial portion 220 is a first axial groove and the second axial portion 230 is a second axial groove. The first section 250 is a first complementary axial groove and the second section 260 is a second complementary axial groove. The axial portion of the heat shield segment is that portion along which the heat shield segment is coupled to a neighbouring heat shield segment along with the sealing means 180, thereby forming an interface between the first heat shield segment 160 and the second heat shield segment 170.

An axial groove is a groove that extends along at least a portion of an axial portion of a heat shield segment, for example, the axial groove can be, but not limited to, in the form of a recess or a furrow. Similarly, a complementary axial groove is a groove, which is shaped in a complementary manner as compared to its corresponding axial groove. The complementary axial groove extends along at least a portion of a section of the sealing means 180. The profile of the complementary axial groove is complementary to its corresponding axial groove. The axial groove and the complementary axial groove fit together, for example, in a dovetail manner, to facilitate the coupling. For example, the first axial groove 220 and the first complementary axial groove 250 are shaped in a complementary manner such that an appropriate coupling is achieved between the first heat shield segment 160 and the seal strip 240. Similarly, the second axial groove 230 and the second complementary axial groove 260 are shaped in a complementary manner such that an appropriate coupling is achieved between the second heat shield segment 170 and the seal strip 240.

The pair of axial seals 213, 215 fastens and secures the first heat shield segment 160 to the second heat shield segment 170 by bracing together the first axial portion 220 and the second axial portion 230 from the edges 265, 266 of the heat shield segments 160, 170. The pair of axial seals 213, 215 is arranged to prevent a shearing of the first heat shield segment 160 and the second heat shield segment 170. The shearing is defined as a movement of the heat shield segments 160, 170 in a direction perpendicular to a tangent of the heat shield 150. The first heat shield segment 160 and the second heat shield segment 170 are subject to vibrations and thermal expansions during the operation of the gas turbine 10 comprising the heat shield 150. The vibrations and the thermal expansions influence the heat shield 150 by trying to displace the positions of the heat shield segments 160, 170. The pair of axial seals 213, 215 fastens the heat first heat shield segment 160 to the second heat shield segment 170 such that the shearing of the heat shield segments 160, 170 is obviated.

An axial seal 213 of the pair of axial seals 213, 215 has a first portion 270 and a second portion 280. The first portion 270 is insertable through the first heat shield segment 160 and the second portion 280 is insertable through the second heat shield segment 170. This can be achieved, but not limited to, by providing a slot or a recess on the first heat shield segment 160 and the second heat shield segment 170 so that the first portion 270 and the second portion 280 can be inserted through the heat shield segments 160, 170 respectively. The axial seal 213 can be replaced with other fastening means, but not limited to, a screw, a bolt, a rivet, and a combination of the aforementioned. The axial seal 213 can also be made of a thermally expandable material so that the axial seal 213 also expands when the first heat shield segment 160 and the second heat shield segment 170 expand and move in opposite directions with an increase in the ambient temperature.

According to an embodiment of the invention, FIG 5 depicts the seal strip 240 comprising the thermally expandable portion 190 of the sealing means 180. The thermally expandable portion 190 has a corrugated profile, which is termed a corrugated portion 240. The corrugated portion 240 facilitates the expansion of the sealing means 180 by virtue of its structural property. The corrugated portion 240 in its compressed state undergoes expansion with an increase in the ambient temperature without undergoing any structural deformations. The corrugated portion 240 also returns to its original shape with a decrease in the ambient temperature of the heat shield 150.

In another aspect, the heat shield segments 160, 170 can possess a higher co-efficient of thermal expansion compared to the co-efficient of thermal expansion of the thermally expandable portion 190. In this case, with an increase in the temperature, the heat shield segments 160, 170 expand more in comparison to the thermally expandable portion 190, thereby causing the corrugated portion 240 to compress. The corrugated portion 240, by virtue of it being flexible, accommodates the expansion of the heat shield segments 160, 170 by compressing itself, and acts as a mechanical shock absorber, and obviates deformation of the heat shield structure and thermal cracks in the annular heat shield 150.

The corrugated portion 240 comprises the first complementary axial groove 250 and the second complementary axial groove 260 on opposite sides of the corrugated portion 240. In context of the corrugated portion 240, the first complementary axial groove 250 is termed as a first flank and the second complementary axial groove 260 is termed as a second flank 260. By profiling the first flank 250 and the second flank 260, the first axial groove 220 and the second axial groove 230 are received respectively for coupling the first heat shield segment 160 with the second heat shield segment 170.

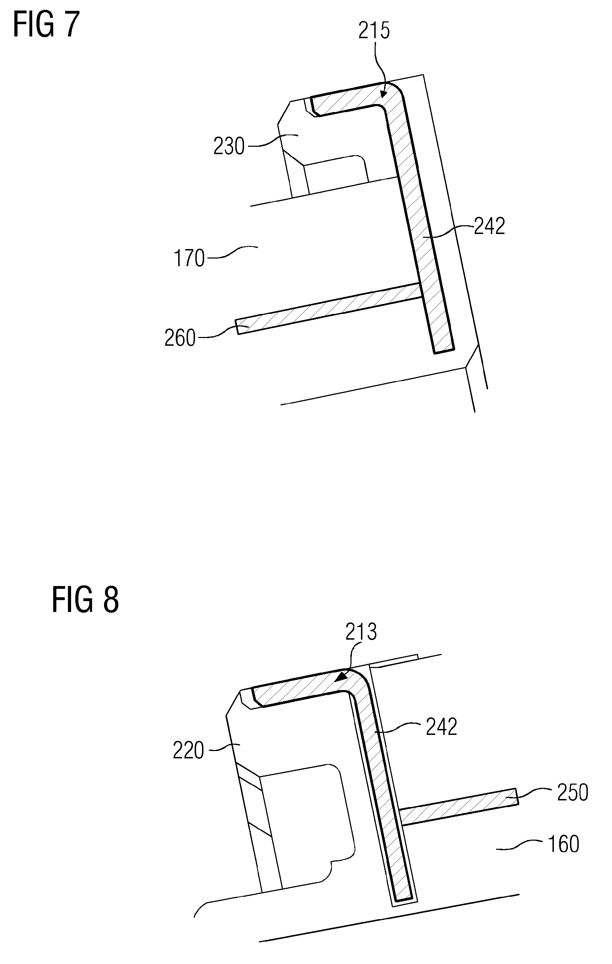

In accordance with an embodiment of invention, the corrugated portion 240 is an M-seal. The M-seal 240 has a corrugated cross-sectional profile in the shape of the English alphabet 'M'. This aspect will be elucidated with reference to FIG 8. In a further aspect of the invention, the entire sealing means 180 can be, but not limited to, comprise the thermally expandable portion 190. This construes to the fact that even the pair of axial seals 213, 215 can be, but not limited to, be made of the thermally expandable portion 190.

FIG 6 and FIG 7 depict technical drawings of cross sectional views along the sections VI-VI and VII-VII of the sealing region 210 depicted in FIG 4. The cross sections VI-VI and VII-VII depict a manner in which the pair of axial seals 213, 215 fasten the first heat shield segment 160 to the second heat shield segment 170. The first portion 270 and the second portion 280 of the first axial seal 213 are inserted through the first axial groove 220 of the first heat shield segment 160 and second axial groove 230 of the second heat shield segment 170 respectively, as depicted in FIG 6. Similarly, the first portion 270 and the second portion 280 of the second axial seal 215 are inserted through the first heat shield segment 160 and the second heat shield segment 170 respectively, as depicted in FIG 7.

FIG 3f depicts a cross sectional view along the section VIII-VIII depicted in FIG 4. The corrugated portion 240 comprises, but not limited to, a pair of crests 290 and a trough 300. The first flank 250 and the second flank 260 are adapted such that the first axial groove 220 and the second axial groove 230 are received respectively for coupling the first heat shield segment 160 with the second heat shield segment 170. The corrugated portion 240 is the M-seal according to the FIG, because its profile corresponds to the alphabet 'M', as viewed along the cross section VIII-VIII.

With an increase in the ambient temperature of the annular heat shield 150, the M-seal 240 undergoes thermal expansion. The thermal expansion results in a movement of the heat shield segments 160, 170 in a tangential direction with respect to the annular heat shield 150. The first heat shield segment 160 moves in a direction 310 and the second heat shield segment 170 moves in an opposite direction 311. Similarly, upon decreasing the ambient temperature, that is a decrease in the temperature from a very high temperature to a slightly lower temperature, the M-seal 240 returns to its original shape by contracting itself. During this phenomenon, the first heat shield segment 160 moves in a direction 320 and the second heat shield segment 160 moves in an exactly opposite direction 321. This functional aspect of the M-seal 240 is akin to a thermal shock absorber.

In another aspect, the M-seal 240 also has a structural property akin to a mechanical shock absorber. The corrugated profile of the M-seal 240 facilitates the dampening of the mechanical vibrations and shocks encountered by the annular heat shield 150 during its operation.

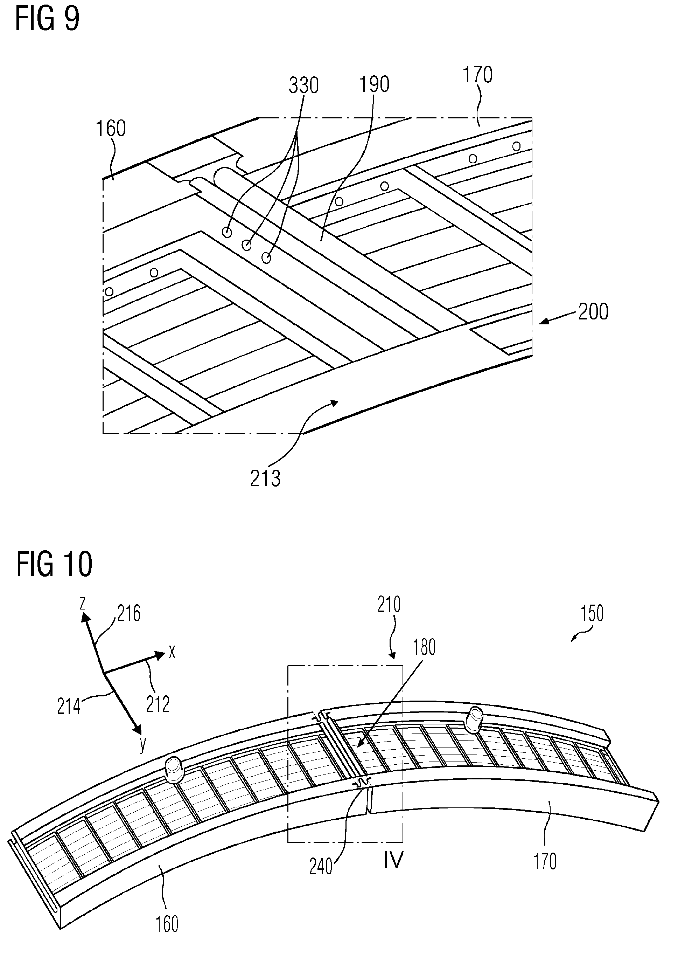

FIG 9 depicts the sealing means 180 comprising one or more holes 330 on the corrugated portion 240. The one or more holes 330 are bored at one or more dedicated locations of the corrugated portion 240. The one or more holes 330 facilitate the introduction of a controlled leakage in the annular heat shield 150.

Controlled leakage is a process of regulation of ambient temperature of the annular heat shield 150. The heat shield 150 is cooled using compressed air from the compressor 90. The temperature of the air exiting the compressor 90 is less than the temperature of the air exiting the combustor 100. Therefore, the air exiting the combustor 100 is termed as hot air and the air exiting the compressor 90 is termed as cold air 90. At normal operating temperature of the gas turbine 10, the one or more holes 330 remain occluded due to the normal shape of the corrugated portion 240. The corrugated portion 240 expands with an increase in the ambient temperature, thereby stretching the corrugated portion 240. This exposes the one or more holes 330 on the corrugated portion 240, which facilitates the release of the cold air 70 from the inside of the annular heat shield 150, thereby reducing and regulating the ambient temperature of a geometrical space enclosed by the annular heat shield 150. This process cools the external and internal regions of the heat shield 150. The geometrical space is defined as the space defined by the enclosure of the annular heat shield 150.

The one or more holes 330 can be provided, but not limited to, boring, after the installation of the corrugated portion 240. In an alternate aspect, the corrugated portion 240 can comprise the one or more holes 330 and provided during the manufacture of the corrugated portion 240 and/or the sealing means 180. A dedicated location on the corrugated portion 240 is defined as a location, at which a hole provided at that location is capable of facilitating the release of hot air 70 outwards from the geometrical space enclosed by the annular heat shield 150. This is similar to a feedback control system for regulating the ambient temperature of the annular heat shield 150 and maintaining a stable operating condition.

FIG 10 depicts a perspective view of the heat shield 150 according to an embodiment described herein. The heat shield 150 is made of the first heat shield segment 160 and the second heat shield segment 170 coupled to one another by the sealing means 180. The sealing region 210 depicts the sealing means 180 and its interaction with the first heat shield segment 160 and the second heat shield segment 170.

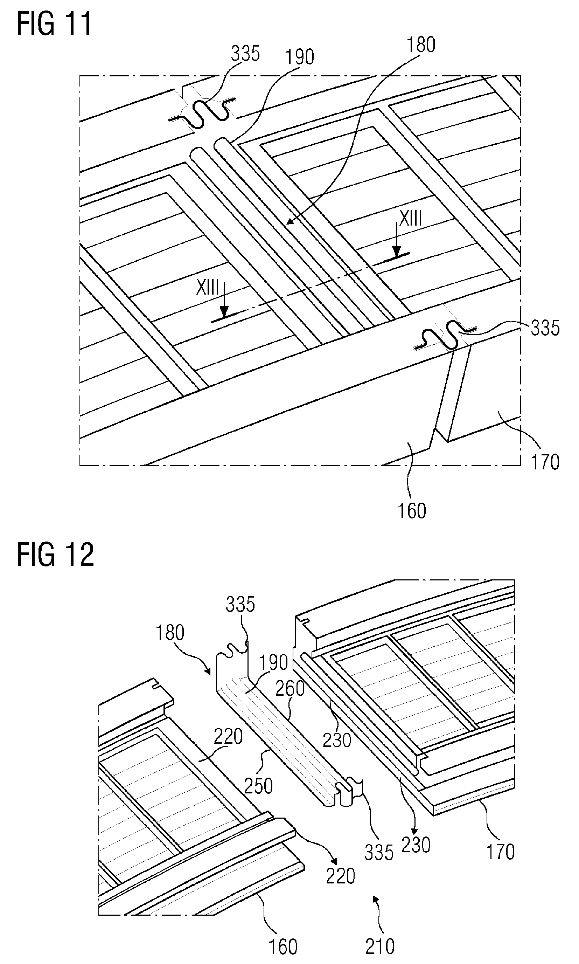

Referring now to FIG 11, which depicts a close-up view of the sealing region 210, the sealing means 180 comprises the seal strip 240 and the fastener 200. The seal strip 240 comprising the fastener 200 has a corrugated profile, and is together termed as the corrugated portion 240. The seal strip 240 and the fastener 200 are formed as integrated and inseparable entities, and together form the corrugated portion 240. The corrugated portion 240 comprises the first complementary axial groove 250 and the second complementary axial groove 260. Since the fastener 200 is comprised in the corrugated portion 240, the first complementary axial groove 250 also comprises the first portion 270 of the fastener 200, and the second complementary axial groove 260 also comprises the second portion 280 of the fastener 200.

The first complementary axial groove 250 comprising the first portion 270, and the second complementary groove 260 comprising the second portion 280 can be profiled such that the first axial groove 220 of the first heat shield segment 160 and the second axial groove 230 of the second heat shield segment 170 are received respectively for coupling and fastening the first heat shield segment 160 and the second heat shield segment 170 with one another.

The corrugated portion 240 is profiled using laser sintering techniques for obtaining a proper fit between the first heat shield segment 160 and the second heat shield segment 170. Laser sintering is beneficial as it simplifies the design for obtaining very complicated shapes of the corrugated portion 240, which can render a very accurate fit between the heat shield segments 160, 170. By laser sintering the seal strip 240 can be adapted based on the shape and dimension of the first axial portion 220 and the second axial portion 230, thereby rendering a tight coupling between the first heat shield segment 160 and the second heat shield segment 170.

FIG 12 depicts an exploded view of the sealing region 210 and its constituents in accordance with multiple embodiments of the invention. The first heat shield segment 160 comprises a first axial portion 220 and the second heat shield segment 170 comprises a second axial portion 230. The sealing means 180 comprises the seal strip 240 comprising the fastener 200, which are formed as integrated and inseparable entities, thereby forming together the corrugated portion 240.

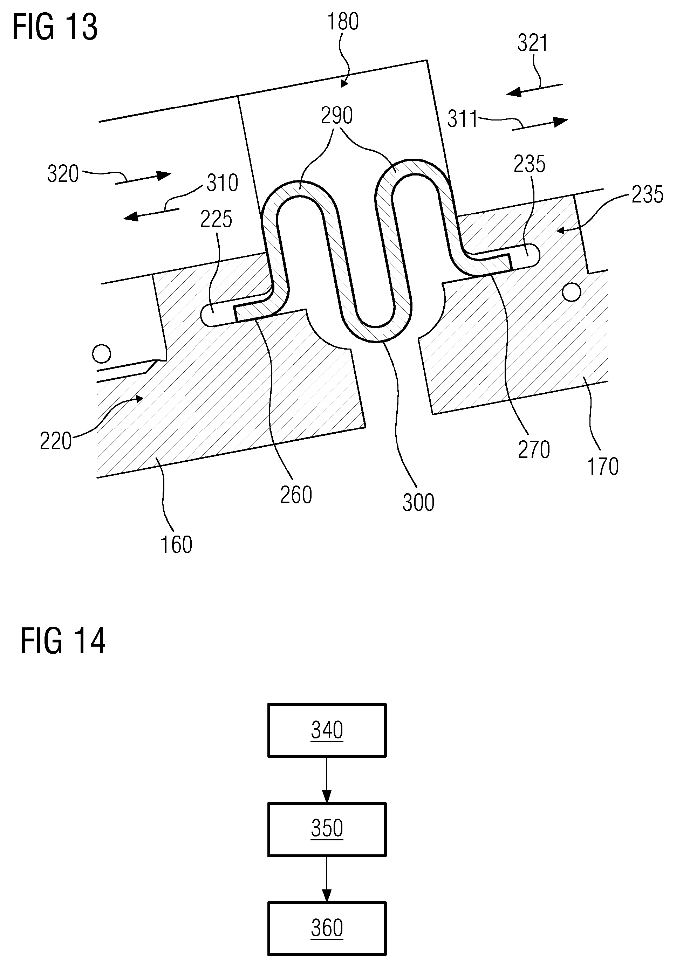

FIG 13 depicts a cross sectional view along the section XIII-XIII depicted in FIG 11. The corrugated portion 240 comprises, but not limited to, a pair of crests 290 and a trough 300. In accordance with an embodiment of invention, the corrugated portion 240 is the M-seal, because its profile corresponds to the alphabet 'M', as viewed along the cross section XIII-XIII of the sealing region 210 depicted in FIG 11. The first flank 250 and the second flank 260 of the M-seal 240 are adapted such that the first axial groove 220 and the second axial groove 230 are received respectively for coupling the first heat shield segment 160 with the second heat shield segment 170. This design of the M-seal 240 facilitates the fastening of the heat shield segments 160, 170 with one another automatically by virtue of its profile.

A flow chart of a method of construction of the heat shield 150 according to any of the embodiments mentioned herein is depicted in FIG 14. The construction of the heat shield 150 commences with a step 340 of arranging the first heat shield segment 160 and the second heat shield segment 170. The heat shield segments 160, 170 are arranged such that the first axial portion 220 and the second axial portion 230 are parallel to one another. This is followed by a step 350, which involves the coupling the first heat shield segment 160 and the second heat shield segment 170. The heat shield segments 160, 170 are coupled by a sealing means 180. The sealing means 180 comprises a thermally expandable portion 190. The thermally expandable portion 190 expands based on the increase in the ambient temperature of the heat shield 150. The step 350 involves the sealing means 180 receiving the first axial portion 220 and the second axial portion 230. The sealing means 180 is adapted by profiling and/or shaping it to receive the first axial portion 220 and the second axial portion 230.

The step 350 of coupling is followed by a step 360 of fastening the first heat shield segment 160 to the second heat shield segment 170. The step 360 is performed to obtain a tight fit between the first heat shield segment 160 and the second heat shield segment 170. The construction concludes with a step 370 of providing the one or more holes 330 at the one or more dedicated locations of the sealing means 180 for introducing the controlled leakage in the geometrical space enclosed by the heat shield 150. The controlled leakage regulates the ambient temperature of the geometrical space of the heat shield 150.

Though the invention has been described with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A heat shield (150) comprising:
- a first heat shield segment (160) comprising a first axial portion (220), wherein the first heat shield segment (160) is a first segment of the heat shield (150),
- a second heat shield segment (170) comprising a second axial portion (230), wherein the second heat shield segment (170) is a second segment of the heat shield (150), and
- a sealing means (180) comprising a thermally expandable portion (190), wherein the sealing means (180) is adapted to receive the first axial portion (220) and the second axial portion (230) for coupling the first heat shield segment (160) and the second heat shield segment (170),
wherein the thermally expandable portion (190) expands based on an ambient temperature of the heat shield (150).

2. The heat shield (150) according to claim 1,
wherein the sealing means (180) comprises a seal strip (240) comprising a first section (250) and a second section (260), wherein
- the first section (250) is adapted to receive the first axial portion (220) for coupling the first heat shield segment (160) and the seal strip (240), and
- the second section (260) is adapted to receive the second axial portion (230) for coupling the second heat shield segment (170) and the seal strip (240).

3. The heat shield (150) according to claim 2,
wherein
- the first axial portion (220) is a first axial groove,
- the second axial portion (230) is a second axial groove,
- the first section (250) is a first complementary axial groove, and
- the second section (260) is a second complementary axial groove,
wherein
- the first axial groove (220) and the first complementary axial groove (250) receive one another for coupling the first heat shield segment (160) and the seal strip (240), and
- the second axial groove (230) and the second complementary axial groove (260) receive one another for coupling the second heat shield segment (170) with the seal strip (240).

4. The heat shield (150) according to any of the claims 1 to 3,
wherein the thermally expandable portion (190) comprises a corrugated portion (240) comprising a first flank (250) and a second flank (260), wherein
- the first complementary axial groove (250) is located on the first flank (250), and
- the second complementary axial groove (260) is located on the second flank (260),
wherein the first flank (250) and the second flank (260) are on opposite sides of the corrugated portion (240).

5. The heat shield (150) according to claim 4,
wherein the corrugated portion (240) is an M-seal comprising the first flank (250) and the second flank (260).

6. The heat shield (150) according to any of the claims 1 to 5,
wherein the sealing means (180) further comprises at least a fastener (200) for fastening the first heat shield segment (160) to the second heat shield segment (170).

7. The heat shield (150) according to claim 6,
wherein the fastener (200) is adapted to fasten the first heat shield segment (160) to the second heat shield segment (160) from shearing with respect to one another.

8. The heat shield (150) according to claim 6 or claim 7, wherein the fastener (200) comprises a first portion (270) and a second portion (280), wherein
- the first portion (270) is insertable through the first heat segment (160), and
- the second portion (280) is insertable through the second heat shield segment (170),
such that the first portion (270) inserted through the first heat shield segment (160) and the second portion (280) inserted through the second heat shield segment (170) fasten the first heat shield segment (160) to the second heat shield segment (170).

9. The heat shield (150) according to any of the claims 1 to 8,
wherein the thermally expandable portion (190) expands proportionally with respect to an increase in the ambient temperature of the heat shield (150).

10. The heat shield (150) according to any of the claims 1 to 9,
wherein the sealing means (180) further comprises one or more holes (330) bored into at one or more dedicated locations of the sealing means (180) for introducing a controlled leakage in a geometrical space enclosed by the heat shield (150), wherein the controlled leakage regulates the ambient temperature of the geometrical space.

11. The heat shield 150 according to any of the claims 1 to 10,
wherein a co-efficient of thermal expansion of the thermally expandable portion 190 is greater than the co-efficient of thermal expansion of the first heat shield segment 160 and the co-efficient of thermal expansion of the second heat shield segment 170.

12. The heat shield (150) according to any of the claims 1 to 11,
wherein the thermally expandable portion (190) comprises an alloy of nickel.

13. The heat shield (150) according to any of the claims 1 to 12 is an annular heat shield.

14. A gas turbine (10) comprising the heat shield (150) according to any of the claims 1 to 13.

15. A method for construction of a heat shield (150), wherein the heat shield (150) comprises:
- a first heat shield segment (160) comprising a first axial portion (220), wherein the first heat shield segment (160) is a first segment of the heat shield (150),
- a second heat shield segment (170) comprising a second axial portion (230), wherein the second heat shield segment (170) is a second segment of the heat shield (150), and
- a sealing means (180) comprising a thermally expandable portion (190), wherein the sealing means (180) is adapted to receive the first axial portion (220) and the second axial portion (230) for coupling the first heat shield segment (160) and the second heat shield segment (170),
wherein the thermally expandable portion (190) expands based on an ambient temperature of the heat shield (150),
the method comprising:
- a step (340) of arranging the first heat shield segment (160) and the second heat shield segment (170), wherein the first axial portion (220) and the second axial portion (230) are parallel to each other,
- a step (350) of coupling the first heat shield segment (160) and the second heat shield segment (170) by receiving the first axial portion (220) and the second axial portion (230) by the sealing means (180), wherein the sealing means (180) is adapted to receive the first axial portion (220) and the second axial portion (230),
- a step (360) of fastening the first heat shield segment (160) to the second heat shield segment (170) to form a tight fit, and
- a step (370) of providing one or more holes (330) at one or more dedicated locations of the sealing means (180) for introducing a controlled leakage in a geometrical space enclosed by the heat shield (150), wherein the controlled leakage regulates the ambient temperature of the geometrical space.
